# EUROPÄISCHE PATENTSCHRIFT

(11) **EP 0 696 628 B1**
(45) Veröffentlichungstag und Bekanntmachung des Hinweises auf die Patenterteilung: **06.05.1999**
(21) Anmeldenummer: 95111493.3
(22) Anmeldetag: 21.07.1995
(51) Int. Cl.: C09J 7/02

(54) **Klebfolienstreifen**
Adhesive tape
Ruban adhésif

(30) Priorität: 12.08.1994 DE 4428587
(43) Veröffentlichungstag der Anmeldung: 14.02.1996
(73) Patentinhaber: Beiersdorf Aktiengesellschaft, 20245 Hamburg (DE)
(72) Erfinder: Lühmann, Bernd, Dr., D-22846 Norderstedt (DE)

(56) Entgegenhaltungen:
- WO-A-92/11333
- DE-C- 4 222 849
- US-A- 4 024 312

## Beschreibung

Die Erfindung betrifft einen Klebfolienstreifen für wiederlösbare Verklebungen, wobei das Lösen der Verklebung durch Ziehen an dem Streifen in Richtung der Verklebungsebene erfolgt.

Derartige Klebfolienstreifen sind bekannt. So sind in DE 3.331.016 A1 und DE 4.222.849 C1 elastische Klebfolien für wiederlösbare Klebverbindungen beschrieben, die es gestatten, eine damit hergestellte Verklebung rückstandsfrei durch einfaches Herausziehen der Klebfolie aus der Klebfuge parallel zur Verklebungsebene, zu lösen. Eine spezielle Anwendung dieser Klebfolien beschreibt die DE 3.714.453 C1. WO 92/11333 beschreibt u. a. Klebfolien für entsprechende Anwendungen, wobei die eingesetzten Klebfolien eine geringe Elastizität bei gleichzeitig hoher Dehnung aufweisen und aus US 4.024.312 ist ebenfalls eine solche Klebfolie bekannt, die ähnlich wie WO 92/11333 eine beidseits mit Selbstklebemasse beschichtete Trägerfolie aufweist, welche hochdehnbar und dennoch recht reißfest ist.

Die in den vorgenannten Patentschriften dargestellten Klebstoffsysteme weisen jedoch auch eine Anzahl von Nachteilen auf:
- Besteht einer der Verklebungspartner aus einem sehr empfindlichen Material, so kann es zum Ende des Löseprozesses zu einer wenigstens teilweisen Schädigung dieses Materials kommen.
- Ebenfalls zum Ende des Löseprozesses kann es zum partiellen Reißen des Klebebandes am Ende desselben kommen, welches dazu führt, daß Klebstoffreste auf wenigstens einem der Verklebungspartner verbleiben, die Verklebung also nicht vollständig rückstandsfrei lösbar ist, im schlimmsten Fall eine Verklebung der Verklebungspartner bestehen bleibt und die Verklebungspartner so gelöst werden müssen, daß einer oder gar beide beschädigt werden.

Diese Nachteile sind für die praktische Anwendung von großer Bedeutung und insbesondere ein Anwender, dem durch Abriß gegen Ende des Löseprozesses seine als reversibel gedachte Verklebung so zu einer irreversiblen wird, ist als Kunde wohl für immer verloren.

Aufgabe der Erfindung war es, hier Abhilfe zu schaffen, insbesondere bei den vollständig aus Klebmasse bestehenden Produkttypen, während der hochreißfeste Folienträger in anderen Produkttypen etwas mehr Gewähr gegen Reißer bietet, obgleich sich die angesprochenen Probleme auch dort stellen.

Demgemäß betrifft die Erfindung Klebfolienstreifen, wie sie in den Patentansprüchen näher gekennzeichnet sind.

Die Enden der erfindungsgemäßen Klebfolienstreifen sind also besonders ausgeformt, um zu erreichen, daß die Verklebungsfläche zu dem Ende des Klebfolienstreifens hin abnimmt, das in der Klebfuge verschwindet, während am anderen Ende dann gezogen werden kann.

Gut geeignet sind z. B. spitze, gezackte, konvex gekrümmte Stripenden, oder auch Strips mit gewellter Endbegrenzung, um nur einige Möglichkeiten zu nennen. Wesentlich ist in jedem Fall eine Reduzierung der Verklebungsfläche zum Ende des Klebestreifens.

Eine theoretische Erklärung für den Erfolg mit den erfindungsgemäßen Klebfolienstreifen liegt nicht so ohne weiteres auf der Hand. Das Ergebnis jedenfalls ist überzeugend: Partielle Reißer oder auch Substratschäden treten nicht auf, im Gegensatz zu den bekannten Streifen mit gerade abgeschnittenem Ende. Auch sehr empfindliche Substrate können erfindungsgemäß reversibel verklebt werden, die Anwendungsmöglichkeiten dieser an sich frappierenden Klebfolienstreifen werden damit erheblich erweitert.

Die Materialien für die erfindungsgemäßen Klebfolienstreifen entsprechen denen der in der Einleitung dieser Schrift zitierten Patentschriften. Allgemein sind sämtliche Klebmassen und Produkte geeignet, welche sich durch seitliches Herausziehen aus einer Klebfuge herauslösen lassen. Auf die eingangs zitierten Druckschriften wird ausdrücklich Bezug genommen, ohne daß deren gesamte Offenbarung hier wiederholt sei.

Die Herstellung entsprechender Klebfolienstreifen kann mittels gängiger Verfahren erfolgen. Als Ausgangsmaterial können Mutterrollen entsprechend DE 4.222.849 C1 eingesetzt werden, welche jedoch bei ihrer Fertigung nicht mittels eines einfachen Scheren- oder Q-Schnittes aufgeschnitten wurden, sondern durch Verwendung z. B. eines Zackenmessers beidseitig sägezahnförmige Kanten aufweisen. Die Aufarbeitung der Mutterrollen kann problemlos entsprechend DE 4.222.849 C1 erfolgen. Die Erzeugung des speziell ausgeformten Klebfolienstreifenendes kann aber auch bei Verwendung von Mutterballen mit glattem Kantenschnitt beim Stanzen der einzelnen Klebfolienstreifen durch ein entsprechend geformtes Stanzwerkzeug erreicht werden. Vorteilhaft ist eine Fertigung, bei welcher kein Abfall z. B. durch Erzeugung des speziell geformten Klebfolienstreifenendes durch Randbeschnitt der Mutterrollen erfolgt. Aber auch ein partielles Abdecken oder inert-Bedrucken des Streifenendes ist möglich, etwa so, daß klebende Zacken verbleiben. Auch diese Technik des Abdeckens und insbesondere Bedruckens von Kleberoberflächen ist bekannt und wird verbreitet eingesetzt. Im nachfolgenden Beispiel wird die Erfindung näher erläutert. Alle Teile verstehen sich als Gewichtsteile.

### Beispiel

Eine Haftklebemasse bestehend aus einem Gemisch von 50 Teilen SIS-Dreiblockpolymer mit einem Blockpolystyrolgehalt von 29 Gew. % (Vector 4211, Dexco), 50 Teilen eines Pentaesters von teilhydriertem Kolophonium (Pentalyn H-E, Hercules) und 1 Teil eines phenolischen Alterungsschutzmittels wird in einer Schichtstärke von 600 µm auf ein doppelseitiges silikonisiertes 80 g/m² starkes Trennpapier extrudiert und das Laminat aus Klebemasse und Trennpapier zu 120 mm breiten Mutterrollen aufgeschnitten. Beim Schneiden werden Zickzack-Messer mit einer Teilung von 5 mm und einer Breite von ebenfalls 5 mm eingesetzt.

In einem zweiten Arbeitsschritt wird zunächst die eine Seite des vorgenannten Klebelaminates mittig (in 25 mm Breite) mit einer 20 µm starken Folie aus Polyethylenterephthalat, die noch offene Klebmasseoberfläche anschließend ganzflächig mit einem 125 mm breiten einseitig silikonisierten Trennpapier derart eingedeckt, daß dieses beidseitig ca. 2.5 mm über das zickzackförmige Klebfolienende herausragt. Nach dem Auskaschieren des doppelseitig silikonisierten Trennpapieres wird die gegenüberliegende Klebfolienseite entsprechend der ersten Klebmasseseite mit der gleichen Polyethylenterephthalatfolie und einem entsprechenden einseitig silikonisierten Trennpapier einkaschiert. Die Herstellung von einzelnen Klebfolienstücken erfolgt durch mittiges Aufschneiden der Rollenware und anschließender Vereinzelung mittels einer Hubstanze. Erhalten werden Klebfolienstücke der Abmessungen 20 mm mal 50 mm, welche an ihrem Ende eine zickzackförmige Struktur aufweisen. Durch Verwendung einer zweiten Stanze werden analoge Klebfolienstücke der Abmessungen 20 mm mal 50 mm mit glattem Ende erzeugt.

Nach Verklebung der Muster auf eine glatte PMMA-Platte wird für Klebfolienstücke mit glattem Ende eine Ablösekraft von ca. 11 N/cm Folienbreite bei einer Abzugsgeschwindigkeit von 300 mm/min gemessen, welche zum Ende des Ablöseprozesses auf 15 N/cm ansteigt. Muster mit gezacktem Klebstreifenende weisen ebenfalls eine Ablösekraft von 11 N/cm Folienbreite auf, welche jedoch zum Ende des Ablöseprozesses nicht ansteigt.

## Patentansprüche

1. Klebfolienstreifen für eine durch Ziehen an dem Streifen in Richtung der Verklebungsebene wieder lösbare Verklebung, dadurch gekennzeichnet, daß die Verklebungsfläche zum einen Ende des Klebfolienstreifens abnimmt, während das andere Ende als Anfasser zum Ziehen dient.

2. Klebfolienstreifen nach Anspruch 1, dadurch gekennzeichnet, daß die Verklebungsfläche abnimmt, indem das Streifenende spitz, gezackt, konvex gekrümmt oder wellenförmig begrenzt ausläuft, oder zum Streifenende hin zunehmend die Klebfolienoberfläche inertisiert ist, wie mittels einer Abdeckung oder eines Aufdrucks.

3. Klebfolienstreifen nach Anspruch 1, dadurch gekennzeichnet, daß der Klebfolienstreifen ein solcher auf Basis von thermoplastischem Kautschuk und klebrigmachenden Harzen ist, wobei die Klebefolie hohe Elastizität und geringe Plastizität aufweist und wobei die Adhäsion geringer als die Kohäsion ist, das Haftvermögen beim Dehnen der Folie weitgehend verschwindet und das Verhältnis von Abzugskraft zu Reißlast mindestens 1 : 1,5 ist, wobei die Masse selbstklebend oder wäremeaktivierbar eingestellt ist.

4. Klebfolienstreifen nach Anspruch 1, dadurch gekennzeichnet, daß das Ende, welches als Anfasser zum Ziehen dient, mit einer Abdeckung versehen ist, die insbesondere UV-undurchlässig ist, wie mit einer dimensionsstabilen und insbesondere beidseitig auf die Klebfolie aufkaschierten Kunststoff-Folie.

5. Klebfolienstreifen nach Anspruch 1, dadurch gekennzeichnet, daß der Klebfolienstreifen ein solcher mit einer hochdehnbaren, praktisch nicht rückstellenden Trägerfolie und einer druckempfindlichen Selbstklebemasse auf beiden Seiten der Trägerfolie ist, wobei die Trägerfolie eine genügend hohe Bruchdehnung (tensile strength at break) hat, so daß sie nicht reißt, bevor der Klebfolienstreifen vom Substrat abgezogen ist.

## Claims

1. Adhesive film strip for an adhesive bond which can be separated again by pulling on the strip in the direction of the bond plane, characterized in that the bond area decreases at one end of the adhesive film strip, while the other end serves as tab for pulling.

2. Adhesive film strip according to Claim 1, characterized in that the bond area decreases through the strip end being terminated in a pointed, serrated, convex-curved or wavy shape, or the adhesive film surface has been increasingly rendered inert toward the strip end, such as by means of a cover or print.

3. Adhesive film strip according to Claim 1, characterized in that it is based on a thermoplastic rubber and tackifying resins, the adhesive film having high elasticity and low plasticity, and the adhesion being lower than the cohesion, the adhesive strength substantially disappearing on stretching of the film, and the ratio between peel force and tear strength being at least 1 : 1.5, and the adhesive composition being self-adhesive or heat-activatable.

4. Adhesive film strip according to Claim 1, characterized in that the end serving as tab for pulling is provided with a cover which is, in particular, UV-opaque, such as with a dimensionally stable plastic film, in particular laminated onto the adhesive film on both sides.

5. Adhesive film strip according to Claim 1, characterized in that it is a highly extensible, virtually non-resilient base film and a pressure-sensitive self-adhesive composition on both sides of the base film, where the base film has a sufficiently high tensile strength at break that it does not tear before the adhesive film strip has been peeled off from the substrate.

## Revendications

1. Ruban de film adhésif pour un collage détachable par une traction sur le ruban dans la direction du plan de collage, caractérisé en ce que la surface de collage va en rétrécissant vers une extrémité du ruban de film adhésif, tandis que l'autre extrémité sert de prise pour la traction.

2. Ruban de film adhésif suivant la revendication 1, caractérisé en ce que la surface de collage va en rétrécissant, en ce que l'extrémité de ruban se termine par un bord pointu, denté, courbé de façon convexe ou en forme de vague, ou en ce que la surface du film adhésif est rendue de plus en plus inerte vers l'extrémité du ruban, comme au moyen d'un recouvrement ou d'une impression.

3. Ruban de film adhésif suivant la revendication 1, caractérisé en ce que le ruban de film adhésif est un ruban à base de caoutchouc thermoplastique et de résines à propriétés adhésives, dans lequel le film adhésif présente une élasticité élevée et une faible plasticité et l'adhésion est inférieure à la cohésion, le pouvoir adhésif disparaissant pratiquement lors de l'extension du ruban, le rapport entre la force de traction et la résistance au déchirement s'élevant au moins à 1:1,5, et la masse étant composée de manière à être autoadhésive ou activable thermiquement.

4. Ruban de film adhésif suivant la revendication 1, caractérisé en ce que l'extrémité, qui sert de prise pour la traction, est pourvue d'un revêtement qui est en particulier opaque au rayonnement UV, comme un film plastique de dimensions stables et en particulier laminé des deux côtés sur le film adhésif.

5. Ruban adhésif suivant la revendication 1, caractérisé en ce que le ruban de film adhésif est un ruban comportant un film support fortement extensible, pratiquement sans résilience et une masse autoadhésive sensible à la pression sur les deux faces du film support, le film support présentant une résistance de tension à la rupture (tensile strength at break) suffisamment élevée pour qu'il ne se déchire pas avant que le ruban de film adhésif soit enlevé du substrat.
